Europäisches Patentamt

European Patent Office

Office européen des brevets

(11) Veröffentlichungsnummer: **0 098 313**
**A1**

(12) # EUROPÄISCHE PATENTANMELDUNG

(21) Anmeldenummer: 82105852.6

(22) Anmeldetag: 01.07.82

(51) Int. Cl.³: **F 16 G 15/02**

(43) Veröffentlichungstag der Anmeldung: **18.01.84**
**Patentblatt 84/3**

(84) Benannte Vertragsstaaten: **AT BE CH FR GB IT LI LU NL SE**

(71) Anmelder: **Firma August Thiele, Leckingser Strasse 207, D-5860 Iserlohn-Kalthof (DE)**

(72) Erfinder: **Der Erfinder hat auf seine Nennung verzichtet**

(74) Vertreter: **Schwarz, Klaus-Jürgen, Dipl.-Ing., Adenauerallee 46a, D-5300 Bonn 1 (DE)**

(54) **Kettenverbindungsglied für Rundstahlketten.**

(57) Das Kettenverbindungsglied, das insbesondere als Aufhängekopf für laststrangorientierte Anschlagkettengehänge nach dem Baukastensystem geeignet ist, besteht aus einem U-förmigen Aufhängebügel (1) und einem damit durch einen Bolzen (6) schwenkbar verbundenen Einhängeglied (7) für eine Rundstahlkette (8). Das Einhängeglied (7) hat nur einen zwischen die beiden Schenkel (2, 3) des Aufhängebügels (1) ragenden Kopfteil (9) mit einer Querbohrung (10) für den Verbindungsbolzen (6) und zwei daran gabelförmig anschließende Schenkel (11, 12), die einen Einhängeschlitz (13) für ein Kettenglied (8') zwischen sich einschließen und durch einen Anschlagbolzen (14) miteinander verbunden sind. Der Aufhängebügel (1) und das Einhängeglied (7) bestehen aus hochfesten Gesenkschmiedeteilen ohne zusätzliche Oberflächenbearbeitung, und die Querbohrung (10) am Kopfteil (9) kann jeweils so angeordnet sein, daß der Anschlagbolzen (14) entweder in einer gemeinsamen Ebene mit dem Verbindungsbolzen (6) liegt oder quer dazu angeordnet ist, so daß durch den abgehenden Anschlagkettenstrang je nach den vorkommenden Belastungsrichtungen keine unzulässigen Beanspruchungen auftreten.

0098313

Akten-Nr. 71 260/82

Anmelder:   Firma August Thiele, Leckingser Str. 207
            5860 Iserlohn-Kalthof, Bundesrepublik
            Deutschland

Kettenverbindungsglied für Rundstahlketten

Die Erfindung betrifft ein Kettenverbindungsglied für Rundstahlketten nach dem Oberbegriff des Anspruches 1, das insbesondere als Aufhängekopf für laststrang-orientierte Anschlagkettengehänge nach dem Baukastensystem geeignet ist.

Bei laststrang-orientierten Anschlagkettengehängen nach dem
Baukastensystem ergibt sich mitunter die Schwierigkeit, daß
trotz umfangreicher Vorkehrungen nicht verhindert werden kann,
daß an ihnen Anschlagkettenstränge befestigt werden, die eine
höhere Tragkraft haben, als dies nach dem betreffenden laststrang-orientierten Anschlagkettensystem zulässig ist mit
der Folge, daß entweder das betreffende Kettenverbindungsglied, ein Zwischenglied oder das Aufhängeglied, mit dem das
betreffende Kettenverbindungsglied verbunden ist, überbelastet
wird und zu Bruch geht.

Ein weiterer Nachteil von bekannten Kettenverbindungsgliedern besteht darin, daß diese nicht hinreichend gelenkig sind, um sich den vorkommenden Zugrichtungen der abgehenden Anschlagkettenstränge anzupassen, und dadurch Biegemomenten ausgesetzt werden, die ebenfalls zu einer Überbelastung und letztlich zu einer Zerstörung der davon betroffenen Verbindungsglieder führen können.

Die Einzelteile der bekannten Kettenverbindungsglieder bedürfen zudem, selbst wenn sie durch Gesenkschmieden hergestellt sind, an denjenigen Stellen, an denen sie durch den Verbindungsbolzen gelenkig miteinander verbunden sind, einer zum Teil aufwendigen Oberflächenbearbeitung, durch die an den bearbeiteten Stellen der Faserverlauf der Gesenkschmiedeteile zerstört wird, was eine Verringerung der Dauerfestigkeit an den betreffenden Stellen zur Folge hat.

Der Erfindung liegt die Aufgabe zugrunde, ein Kettenverbindungsglied für Rundstahlketten nach dem Oberbegriff des Anspruches 1, das insbesondere als Aufhängekopf für laststrang-orientierte Anschlagkettengehänge nach dem Baukastensystem geeignet ist, aus einfach gestalteten, hochfesten Gesenkschmiedeteilen so auszubilden, daß es allen vorkommenden Belastungen durch die abgehenden Anschlagkettenstränge in den verschiedensten Richtungen standhält und eine hohe Dauerfestigkeit besitzt.

Diese Aufgabe findet ihre Lösung gemäß der Erfindung im wesentlichen durch den Kennzeichnungsteil des Anspruches 1, während in den Ansprüchen 2 bis 13 besonders vorteilhafte Weiterbildungen der Erfindung gekennzeichnet sind.

Die Erfindung bietet den Vorteil, daß mit dem Aufhängebügel je nach vorkommender Belastungsrichtung ein Einhängeglied derart verbunden werden kann, daß sich der Anschlagbolzen des Einhängegliedes mit dem Verbindungsbolzen zwischen den beiden Gliedteilen entweder in einer gemeinsamen Ebene erstreckt oder in einem Winkel von 90° quer dazu angeordnet ist. Dabei können sowohl der Aufhängebügel als auch das Einhängeglied hochfeste Gesenkschmiedeteile sein, die außer den Bohrungen für den Verbindungsbolzen und den Anschlagbolzen keiner weiteren Oberflächenbearbeitung bedürfen. Die Querbohrung am Kopfteil des Einhängegliedes kann jeweils nach Bedarf parallel zum Anschlagbolzen oder quer dazu ausgeführt werden, und weiterhin ist durch die entsprechende Bemessung der einzelnen Teile des Kettenverbindungsgliedes, und zwar insbesondere des Einhängeschlitzes und des Anschlagbolzens für den abgehenden Kettenstrang, eine absolut sichere Montage der nach dem laststrang-orientierten Baukastensystem zusammengehörenden Gehängeteile gewährleistet, wobei als weiterer Vorteil hinzukommt, daß außer dem Kettenverbindungsglied selbst keine weiteren Zwischen- oder Verbindungsglieder erforderlich sind, um von einem Aufhängeglied jeweils eine gewünschte Anzahl von Anschlagketten abgehen zu lassen.

Besonders günstige Belastungsverhältnisse ergeben sich insbesondere dann, wenn nach einem weiteren Merkmal der Erfindung die Breite des Kopfteils des Einhängegliedes in Richtung des Bolzens zwischen der halben und der vollen Gesamtbreite beider Schenkel des Aufhängebügels liegt, wobei in einer bevorzugten Ausführungsform die Breite des Kopfteils etwa 60 bis 80% der Gesamtbreite beider Schenkel des Aufhängegliedes beträgt.

Weitere Einzelheiten und Vorteile der Erfindung ergeben sich aus der folgenden Beschreibung von in der Zeichnung schematisch dargestellten bevorzugten Ausführungsbeispielen. Es zeigen

Fig. 1 ein Kettenverbindungsglied in einer ersten Ausführungsform in Vorderansicht,

0098313

Fig. 2    eine zugehörige Seitenansicht dieses Kettenverbindungsgliedes,

Fig. 3    eine abgewandelte weitere Ausführungsform eines Kettenverbindungsgliedes in Vorderansicht,

Fig. 4    eine zugehörige Seitenansicht,

Fig. 5 und 6 je eine weitere abgewandelte Ausführungsform eines
          Kettenverbindungsgliedes in Vorderansicht und

Fig. 7    eine Seitenansicht des Kettenverbindungsgliedes von
          Fig. 6.

Die in der Zeichnung gezeigten Kettenverbindungsglieder sind für
Rundstahlketten bestimmt und eignen sich insbesondere als Aufhängekopf für laststrang-orientierte Anschlagkettengehänge nach
dem Baukastensystem.

Jedes der in der Zeichnung gezeigten Kettenverbindungsglieder
besteht aus einem gesenkgeschmiedeten U-förmigen Aufhängebügel 1 mit zwei Schenkeln 2, 3, dessen Innenwölbung 4 der Nenndicke 5a eines anschließenden Aufhängegliedes 5 angepaßt ist,
und aus einem damit durch einen Bolzen 6 schwenkbar verbundenen
Einhängeglied 7 für eine abgehende Anschlagkette 8, die als
Rundstahlkette ausgebildet ist, wobei auch das Einhängeglied 7
ein Gesenkschmiedeteil ist.

Bei allen gezeigten Kettenverbindungsgliedern hat das Einhängeglied 7 nur einen einzigen zwischen die beiden Schenkel 2, 3
des Aufhängebügels 1 ragenden Kopfteil 9, der im Bereich des
Verbindungsbolzens 6 einen im wesentlichen rechteckigen Querschnitt hat und mit einer Querbohrung 10 für den Verbindungsbolzen 6 sowie zwei daran gabelförmig anschließenden Schenkeln
11, 12 ausgebildet ist.

Die beiden Schenkel 11, 12 des Einhängegliedes 7 schließen zwischen sich einen Einhängeschlitz 13 für ein Rundstahlkettenglied 8' ein und sind durch einen Anschlagbolzen 14 miteinander verbunden, wobei die Breite 13a des Einhängeschlitzes 13 und der Durchmesser 14a des Anschlagbolzens 14 entsprechend der Nenndicke 8a und der inneren Breite 8b des in den Schlitz 13 einzuhängenden Rundstahlkettengliedes 8' bemessen sind.

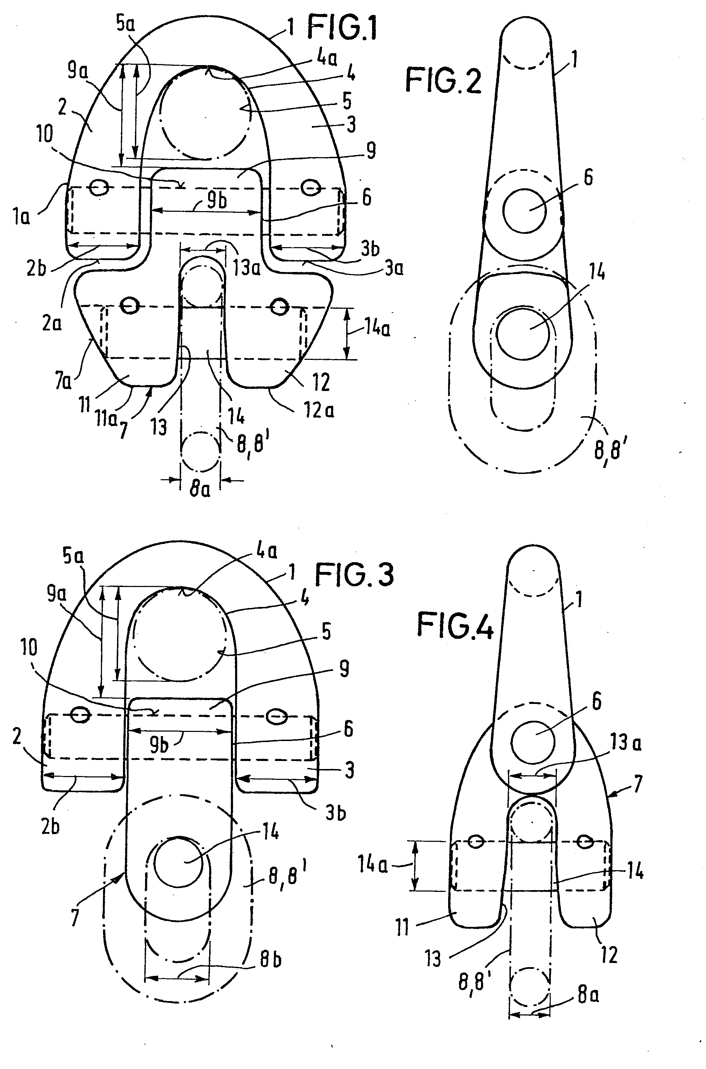

Wie in der Zeichnung weiterhin zu erkennen ist, sind die beiden Schenkel 2, 3 des U-förmigen Aufhängebügels 1 vollkommen massiv ausgebildet und zu ihren freien Enden 2a, 3a hin sowohl in der Ebene des Kettenverbindungsgliedes (Fig. 1, 3, 5 und 6) als auch quer dazu (Fig. 2, 4 und 7) etwa keilförmig verbreitert.

Um zu vermeiden, daß das Kettenverbindungsglied mit einem Aufhängeglied 5 mit einer zu großen Nenndicke 5a verbunden werden kann, endet der Kopfteil 9 des Einhängegliedes 7 in einem Abstand 9a von dem inneren Scheitelpunkt 4a des Aufhängebügels 1, der nur geringfügig, und zwar maximal etwa 10 bis 15%, größer ist als die Nenndicke 5a des anschließenden Aufhängegliedes 5.

Besonders gute Festigkeitseigenschaften des Kettenverbindungsgliedes werden dabei dadurch erreicht, daß die Breite 9b des Kopfteiles 9 in Richtung des Bolzens 6 zwischen der halben und der vollen Gesamtbreite (2b + 3b) beider Schenkel 2, 3 des Aufhängebügels 1 liegt und vorzugsweise etwa 60 bis 80% der Gesamtbreite (2b + 3b) beider Schenkel beträgt.

Bei dem in Fig. 1 und 2 gezeigten ersten Ausführungsbeispiel eines derartigen Kettenverbindungsgliedes liegen der Verbindungsbolzen 6 und der Anschlagbolzen 14 in der gemeinsamen Darstellungsebene von Fig. 1, und die beiden Schenkel 11, 12 des Einhängegliedes 7 sind beiderseits des Einhängeschlitzes 13 bis unter die Schenkelenden 2a, 3a des Aufhängebügels 1 etwa T-förmig verbreitert. Die verbreiterten Schenkel 11, 12 des Einhängegliedes 7 sind außerdem im Anschluß an die Kontur 1a des Aufhängebügels 1 zu ihren freien Enden 11a, 12a hin und in Richtung auf den Einhängeschlitz 13 etwa keilförmig verjüngt, so daß insbesondere in der gestreckten Lage des Kettenverbindungsgliedes die äußeren Konturen 1a, 7a des Aufhängebügels 1 und des Einhängegliedes 7 ohne Absätze und Sprünge im wesentlichen kontinuierlich ineinander übergehen.

Im Gegensatz zu dem Ausführungsbeispiel von Fig. 1 und 2 sind bei den Ausführungsbeispielen von Fig. 3 bis 7 der Verbindungsbolzen 6 und der Anschlagbolzen 14 nicht in einer gemeinsamen, sondern in zwei um 90° gegeneinander versetzten Ebenen angeordnet.

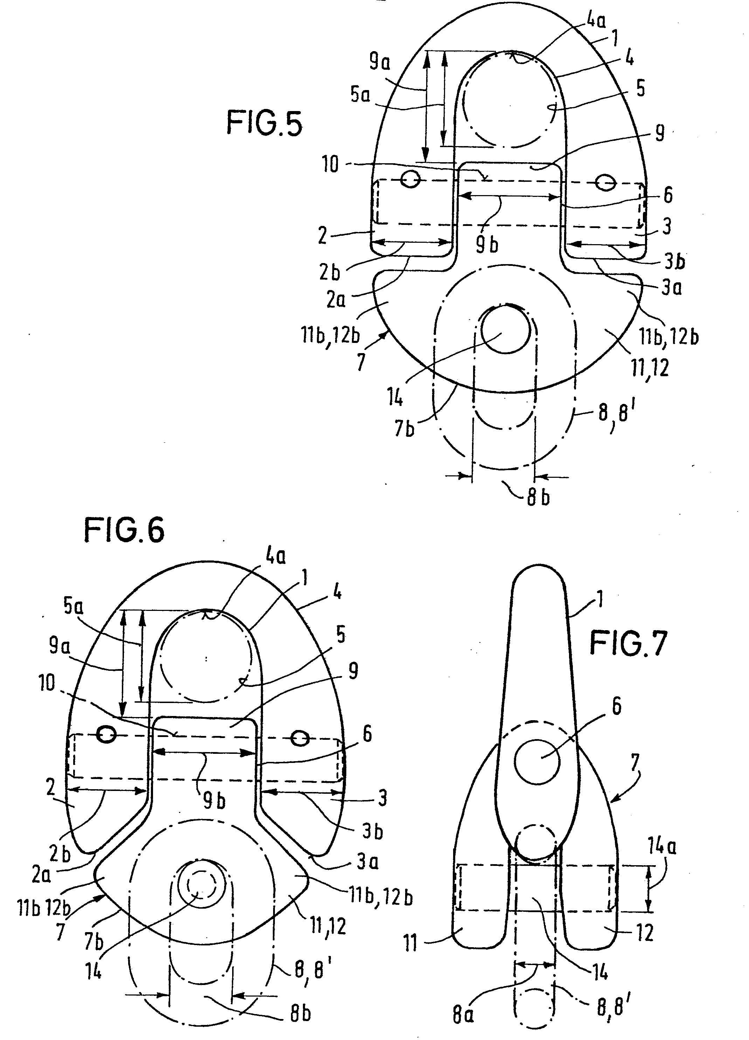

Während bei dem Ausführungsbeispiel von Fig. 3 und 4 die beiden Schenkel 11, 12 des gabelförmigen Einhängegliedes 7 zwischen den beiden Schenkelenden des Aufhängebügels 1 leicht V-förmig und mit jeweils gleichbleibender Breite abwärts gerichtet sind, sind bei den Ausführungsbeispielen von Fig. 5 und 6 die beiden Schenkel 11, 12 des Einhängegliedes an den Stellen 11b, 12b parallel zum Einhängeschlitz 13 bis unter die Schenkelenden 2a, 3a des Aufhängebügels 1 verbreitert. Die beiden Schenkel 11, 12 des Einhängegliedes 7 sind bei beiden gezeigten Ausführungsbeispielen im Bereich 7b zwischen den nach beiden Seiten gerichteten Verbreiterungen 11b, 12b etwa kreisbogenförmig abgerundet.

Bei dem Ausführungsbeispiel von Fig. 5 sind die beiden Schenkel 11, 12 des Einhängegliedes 7 parallel zu den freien Enden 2a, 3a des Aufhängebügels 1 etwa umgekehrt T-förmig verbreitert, und bei dem Ausführungsbeispiel von Fig. 6 und 7

0098313

sind die beiden Schenkel 2, 3 des Aufhängebügels 1 zu ihren freien Enden 2a, 3a keilförmig verjüngt und schließen einen Winkel von etwa 60° bis 120°, vorzugsweise etwa 90°, zwischen sich ein und die Verbreiterungen 11b, 12b der Schenkel 11, 12 des Einhängegliedes 7 sind in einem parallelen Abstand dazu winkelförmig gegeneinander gerichtet.

0098313

Patentansprüche

1. Kettenverbindungsglied für Rundstahlketten, insbesondere Aufhängekopf für laststrang-orientierte Anschlagkettengehänge nach dem Baukastensystem, bestehend aus einem U-förmigen Aufhängebügel, dessen Innenwölbung der Nenndicke eines anschließenden Aufhängegliedes angepaßt ist, und einem damit durch einen Bolzen schwenkbar verbundenen Einhängeglied für eine Rundstahlkette, dadurch gekennzeichnet, daß das Einhängeglied (7) einen zwischen die beiden Schenkel (2, 3) des Aufhängebügels (1) ragenden Kopfteil (9) mit einer Querbohrung (10) für den Verbindungsbolzen (6) und zwei daran gabelförmig anschließende Schenkel (11, 12) aufweist, die einen Einhängeschlitz (13) für ein Kettenglied (8') zwischen sich einschließen und durch einen Anschlagbolzen (14) miteinander verbunden sind, wobei die Breite (13a) des Einhängeschlitzes (13) und der Durchmesser (14a) des Anschlagbolzens (14) entsprechend der Nenndicke (8a) und der inneren Breite (8b) des in den Schlitz (13) einzuhängenden Kettengliedes (8') bemessen sind.

2. Kettenverbindungsglied nach Anspruch 1, dadurch gekennzeichnet, daß die beiden Schenkel (2, 3) des Aufhängebügels (1) massiv ausgebildet und zu ihren freien Enden (2a, 3a) hin sowohl in der Ebene des Kettenverbindungsgliedes als auch quer dazu etwa keilförmig verbreitert sind.

3. Kettenverbindungsglied nach Anspruch 1 oder 2, dadurch gekennzeichnet, daß der Kopfteil (9) des Einhängegliedes (7) im Bereich des Bolzens (14) einen im wesentlichen rechteckigen Querschnitt hat und in Richtung der Längssymmetrieebene des Kettenverbindungsgliedes in einem
Abstand (9a) von dem inneren Scheitelpunkt (4a) des
Aufhängebügels (1) endet, der nur geringfügig - maximal
etwa 10 bis 15% - größer ist als die Nenndicke (5a) des
anschließenden Aufhängegliedes (5).

4. Kettenverbindungsglied nach einem der Ansprüche 1 bis 3,
dadurch gekennzeichnet, daß die Breite (9b) des Kopfteils (9) des Einhängegliedes (7) in Richtung des Bolzens (6) zwischen der halben und der vollen Gesamtbreite
(2b + 3b) beider Schenkel (2, 3) des Aufhängebügels (1)
liegt.

5. Kettenverbindungsglied nach Anspruch 4, dadurch gekennzeichnet, daß die Breite (9b) des Kopfteils (9) etwa 60
bis 80% der Gesamtbreite (2b + 3b) beider Schenkel (2, 3)
des Aufhängegliedes (1) beträgt.

6. Kettenverbindungsglied nach einem der Ansprüche 1 bis 5,
dadurch gekennzeichnet, daß der Verbindungsbolzen (6)
und der Anschlagbolzen (14) in einer gemeinsamen Ebene
liegen. (Fig. 1 und 2)

7. Kettenverbindungsglied nach Anspruch 6, dadurch gekennzeichnet, daß die beiden Schenkel (11, 12) des Einhängegliedes (7) beiderseits des Einhängeschlitzes (13) bis
unter die Schenkelenden (2a, 3a) des Aufhängebügels (1)
verbreitert sind.

8. Kettenverbindungsglied nach Anspruch 6 und 7, dadurch gekennzeichnet, daß die verbreiterten Schenkel (11, 12) des
Einhängegliedes (7) im Anschluß an die Kontur (1a) des
Aufhängebügels (1) zu ihren freien Enden (11a, 12a) hin
und in Richtung auf den Einhängeschlitz (13) etwa keilförmig verjüngt sind. (Fig. 1)

9. Kettenverbindungsglied nach einem der Ansprüche 1 bis 5, dadurch gekennzeichnet, daß der Verbindungsbolzen (6) und der Anschlagbolzen (14) in zwei um 90° gegeneinander versetzten Ebenen angeordnet sind. (Fig. 3 bis 7)

10. Kettenverbindungsglied nach Anspruch 9, dadurch gekennzeichnet, daß die beiden Schenkel (11, 12) des Einhängegliedes (7) parallel zum Einhängeschlitz (13) bis unter die Schenkelenden (2a, 3a) des Aufhängebügels (1) verbreitert sind. (Fig. 5 und 6)

11. Kettenverbindungsglied nach Anspruch 9 und 10, dadurch gekennzeichnet, daß die beiden Schenkel (11, 12) des Einhängegliedes (7) im Bereich (7b) zwischen den beidseitigen Verbreiterungen (11b, 12b) etwa kreisbogenförmig abgerundet sind. (Fig. 5 und 6)

12. Kettenverbindungsglied nach Anspruch 9 bis 11, dadurch gekennzeichnet, daß die beiden Schenkel (11, 12) des Einhängegliedes (7) parallel zu den freien Enden (2a, 3a) des Aufhängebügels (1) etwa umgekehrt T-förmig verbreitert sind. (Fig. 5)

13. Kettenverbindungsglied nach Anspruch 9 bis 11, dadurch gekennzeichnet, daß die beiden Schenkelenden (2a, 3a) des Aufhängebügels (1) einen Winkel von etwa 60° bis 120°, vorzugsweise etwa 90°, zwischen sich einschließen, und daß die Verbreiterungen (11b, 12b) der Schenkel (11, 12) des Einhängegliedes (7) parallel zu den Schenkelenden (2a, 3a) winkelförmig gegeneinander gerichtet sind. (Fig.6)

-1/2-                    0098313

FIG.1
FIG.2
FIG.3
FIG.4

FIG.5

FIG.6

FIG.7

-2/2-

0098313

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | **---**<br>DE-A-2 730 838 (THIELE)<br>* Seite 5, Zeile 12 - Seite 6, Zeile 22; Figuren 1,2 * | 1,2 | F 16 G 15/02 |
| A | **---**<br>DE-A-2 353 947 (THIELE)<br>* Seite 6, Zeile 3 - Seite 8, Zeile 23; Figuren 1-4 * | 1 | |
| A | **---**<br>DE-A-2 726 235 (THIELE) | | |
| A | **---**<br>DE-A-2 335 131 (RUD)<br>**-----** | | |

**RECHERCHIERTE SACHGEBIETE (Int. Cl. 3)**

F 16 G

Der vorliegende Recherchenbericht wurde für alle Patentansprüche erstellt.

| Recherchenort<br>DEN HAAG | Abschlußdatum der Recherche<br>26-01-1983 | Prüfer<br>NADELHOFFER J. |
|---|---|---|